# EUROPEAN PATENT APPLICATION

(11) **EP 4 542 867 A1**
(43) Date of publication of application: **23.04.2025**
(21) Application number: 23204386.9
(22) Date of filing: 18.10.2023
(51) Int. Cl.: H04B 1/16, H04W 52/02

(54) **DUAL DC/DC CONVERTER POWER MANAGEMENT SYSTEM FOR WIRELESS COMMUNICATION DEVICES**

(71) Applicant: Waltero Holding AB, 223 63 Lund (SE)
(72) Inventor: Ljungman, David, 26262 Viken (SE); Asklund, Bo, 185 41 Vaxholm (SE); Lindoff, Bengt, 237 35 Bjärred (SE); Storm, Kristian, 24562 Hjärup (SE)
(74) Representative: Invent Horizon IP

(57) **Abstract**

A wireless communication device comprises a battery, a wireless communication unit (WCU) that can be configured to be in active mode or deep sleep mode, a first DC/DC-converter connected to the battery and configured to drive the WCU in a deep sleep mode, and a second DC/DC-converter connected to the battery via a switch and configured to drive the WCU in an active mode. The device also includes a processor configured to determine a state of a trigger signal and, upon determination, configure the switch to be disabled or enabled based on the trigger signal, so that the WCU is driven by the first or second DC-DC converter, respectively. This configuration allows for efficient power management in the wireless communication device.

## Description

### Field

The technology relates to the field of wireless communication devices, specifically focusing on power management and energy efficiency in devices that operate using various communication protocols such as cellular communication, Bluetooth, WiFi, or LoRa.

### Background

The Internet of Things (IoT) has become an increasingly important aspect of modern technology, with a wide range of applications in various industries. IoT devices typically rely on wireless communication to transmit and receive data, often using low-power communication protocols to conserve energy and extend battery life. As the number of IoT devices continues to grow, there is an increasing demand for low-cost, energy-efficient devices that can operate for extended periods without the need for frequent battery replacement or maintenance.

One of the challenges in designing IoT devices is the need to balance power efficiency with the performance requirements of the wireless communication unit (WCU), which is responsible for transmitting and receiving data. The WCU typically operates in two modes: an active mode, in which it consumes a relatively high amount of power while configured for being able to transmit and receive data, and a deep sleep mode, in which it consumes significantly less power while waiting for the next transmission or reception sessions. The power management system of the IoT device must be designed to handle these high power dynamics efficiently, ensuring that the device consumes as little power as possible while still meeting the performance requirements of the WCU.

In the prior art, power management systems for IoT devices often rely on low-cost power management circuits, such as DC/DC converters, to provide the necessary power to the WCU. However, these low-cost circuits can have high standby current, which can negatively impact the overall power efficiency of the IoT device. This high standby current can make it challenging to achieve the desired long battery life and low cost requirements for IoT devices.

Furthermore, the power management systems in the prior art may not be designed to handle the high power dynamics of the WCU efficiently, resulting in higher power consumption even in deep sleep mode. This can further reduce the battery life of the IoT device and increase the maintenance costs associated with battery replacement.

In summary, the prior art presents challenges in achieving the desired balance between power efficiency, performance, and cost for IoT devices. There is a need for improved power management systems that can handle the high power dynamics of the WCU efficiently while maintaining low standby current and overall power consumption, thereby extending the battery life and reducing the maintenance costs of IoT devices.

### Summary

According to a first aspect of the disclosure, a wireless communication device is provided, which comprises a battery, a wireless communication unit (WCU) that can be configured to be in active mode or deep sleep mode, a first DC/DC-converter connected to the battery and configured to drive the WCU in a deep sleep mode, a second DC/DC-converter connected to the battery via a switch and configured to drive the WCU in an active mode, and a processor configured to determine a state of a trigger signal and upon determination, configure the switch to be disabled or enabled based on the mode of the WCU. This aspect provides efficient power management for the wireless communication device, allowing for longer battery life and reduced power consumption.

Optionally in some examples, the trigger signal is based on at least one of the following: a clock signal, a mode change signal, sensor readings, or user interaction. This provides flexibility in determining when the WCU should switch between active mode and deep sleep mode, allowing for more efficient power management.

Optionally in some examples, the processor is further configured to control the modes of the WCU based on the determined state of the trigger signal. This allows for seamless switching between modes, ensuring that the WCU is always operating in the most efficient mode for the current situation.

Optionally in some examples, the wireless communication device further comprises a first diode having an input connected to an output of the first DC/DC-converter and an output connected to a power supply of the WCU, and a second diode having an input connected to an output of the second DC/DC-converter and an output connected to the power supply of the WCU. This configuration prevents reverse current flow and ensures that the WCU is always powered by the appropriate DC/DC-converter.

Optionally in some examples, the first DC/DC-converter has a low quiescent current of less than 1 micro-Ampere. This ensures that the first DC/DC-converter consumes minimal power when the WCU is in deep sleep mode, further extending battery life.

Optionally in some examples, the second DC/DC-converter has a high power capability of more than 1 A output current. This ensures that the second DC/DC-converter can provide sufficient power to the WCU when it is in active mode, allowing for reliable and efficient operation.

Optionally in some examples, the processor is powered by the first DC/DC-converter. This ensures that the processor is always powered, even when the WCU is in deep sleep mode, allowing it to continue monitoring for trigger signals.

Optionally in some examples, the switch is integrated into the second DC/DC-converter. This simplifies the overall design of the wireless communication device and reduces the number of components required.

Optionally in some examples, the WCU is configured to operate using at least one of the following wireless communication protocols: NB-IoT, LTE CAT-M, NR-redcap, Bluetooth, WiFi, or LoRa. This provides flexibility in the types of wireless communication that the power management system can support, making it suitable for a wide range of applications.

According to a second aspect of the disclosure, a method of power management for a wireless communication device is provided. The method comprises enabling the first DC/DC-converter and configuring the WCU to be in a deep sleep mode, disabling the switch to disconnect the second DC/DC-converter from the WCU, monitoring for trigger signals indicating the WCU to go to an active mode, enabling the switch to connect the second DC/DC-converter to the WCU and configuring the WCU to be in an active mode upon receiving an active mode trigger signal, monitoring for trigger signals indicating the WCU to go to a deep sleep mode, and configuring the WCU to be in a deep sleep mode and disabling the switch upon receiving a deep sleep mode trigger signal. This method provides efficient power management for the wireless communication device, allowing for longer battery life and reduced power consumption.

Optionally in some examples, determining the state of the trigger signal comprises monitoring at least one of the following: a clock signal, a mode change signal, sensor readings, or user interaction. This provides flexibility in determining when the WCU should switch between active mode and deep sleep mode, allowing for more efficient power management.

Optionally in some examples, configuring the WCU to be in an active mode or a deep sleep mode is based on the determined state of the trigger signal. This allows for seamless switching between modes, ensuring that the WCU is always operating in the most efficient mode for the current situation.

According to a third aspect of the disclosure, a computer program product is provided, comprising a non-transitory computer-readable medium storing instructions that, when executed by a processor of a wireless communication device, cause the processor to perform the method of power management as described above. This computer program product enables efficient power management for the wireless communication device, allowing for longer battery life and reduced power consumption.

### Brief Description of the Drawings

Examples are described in more detail below with reference to the appended drawings.
Figure 1 is a block diagram illustrating the components of the wireless communication device.
Figure 2 is a flowchart depicting the power management method for the wireless communication device.
Figure 3 is a schematic representation of the wireless communication device in deep sleep mode.
Figure 4 is a schematic representation of the wireless communication device in active mode.

### Detailed Description

The detailed description set forth below provides information and examples of the disclosed technology with sufficient detail to enable those skilled in the art to practice the disclosure.

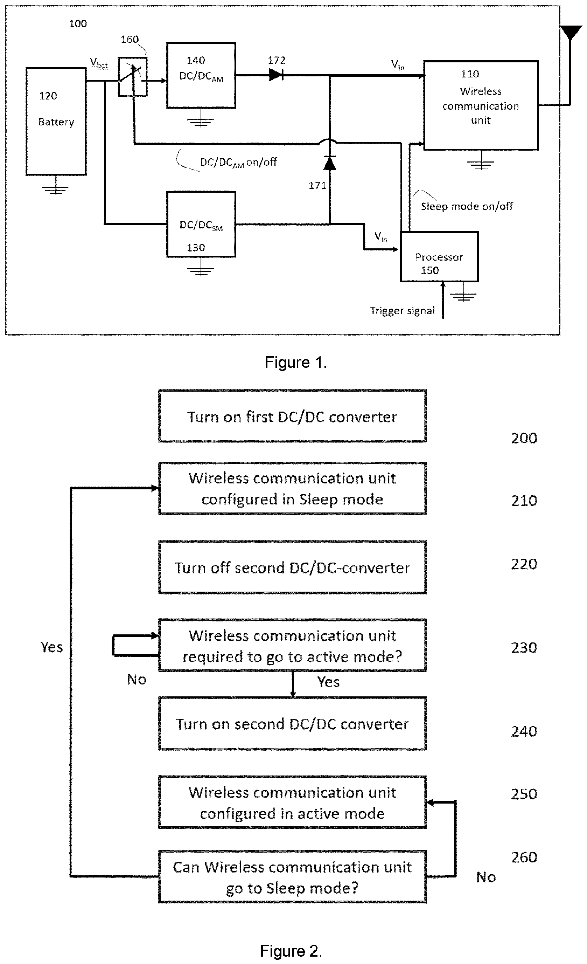

Figure 1 shows a block diagram illustrating the components of the wireless communication device 100. The device includes a battery 120 that provides power to the various components. A wireless communication unit (WCU) 110 is configured to be in active mode (AM) or deep sleep mode (SM) and depending on application can operate using different wireless communication protocols. The WCU 110 is powered by a first DC/DC-converter 130 when in deep sleep mode and a second DC/DC-converter 140 when in active mode. The second DC/DC-converter 140 is connected to the battery 120 via a switch 160. A processor 150 is configured to determine the state of a trigger signal and control the switch 160 and the modes of the WCU 110 based on the determined state. In one example, if the trigger signal indicates the WCU 110 should operate in deep sleep mode, the processor 150 configures the WCU to be in deep sleep mode ("sleep mode on"), and further configures the switch 160 to be "off" disabling the second DC/DC converter ("DC/DC_{AM} off"). In another example, if the trigger signal indicates the WCU 110 should operate in active mode, the processor 150 configures the WCU to be in active mode ("sleep mode off"), and further configures the switch 160 to be "on" enabling the second DC/DC converter ("DC/DC_{AM} on"). The device may also include a first diode 171 connected between the output of the first DC/DC-converter 130 and the power supply of the WCU 110, and a second diode 172 connected between the output of the second DC/DC-converter 140 and the power supply of the WCU 110. In some examples, the processor 150 may be powered by the first DC/DC-converter 130.

Figure 2 is a flowchart depicting the power management method for the wireless communication device 100. The method begins with enabling 200 the first DC/DC-converter 130 and configuring 210 the WCU 110 to be in deep sleep mode. The switch 160 is then disabled to disconnect the second DC/DC-converter 140 from the WCU 110 220. The processor 150 monitors 230 for trigger signals indicating the WCU 110 to go to active mode. Upon receiving an active mode trigger signal, the switch 160 is enabled to connect 240 the second DC/DC-converter 140 to the WCU 110, and the WCU 110 is configured 250 to be in active mode . The processor 150 continues to monitor 260 for trigger signals indicating the WCU 110 to go to deep sleep mode and configures 210 the WCU 110 to be in deep sleep mode and disables the switch 160 upon receiving a deep sleep mode trigger signal.

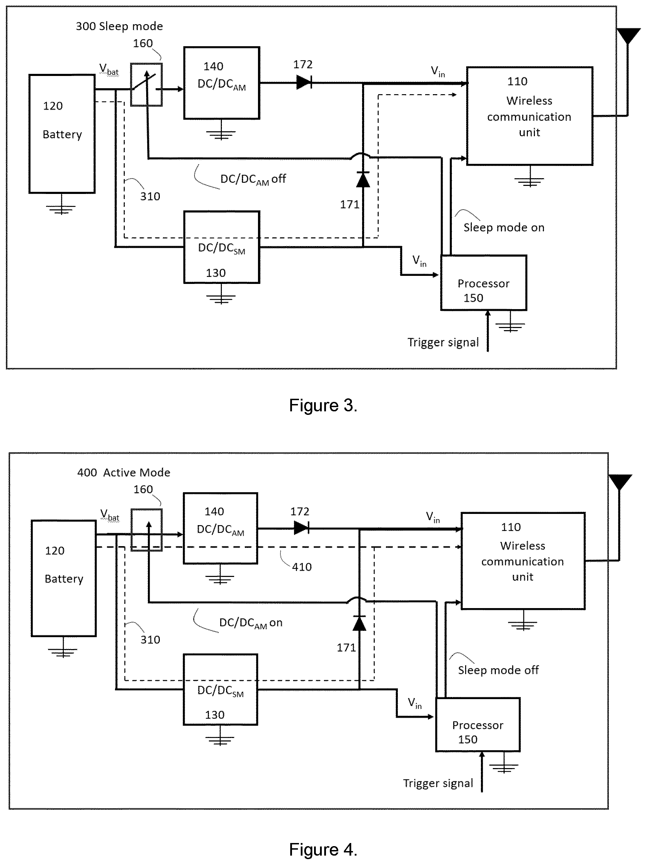

Figure 3 is a schematic representation of the wireless communication device 100 in deep sleep mode 300. In this mode, the first DC/DC-converter 130 provides power 310 to the WCU 110 through the first diode 171. Furthermore, the WCU 110 is configured to be in deep sleep mode (sleep mode "on"). The switch 160 is disabled, disconnecting the second DC/DC-converter 140 from the WCU 110. The processor 150 monitors for trigger signals indicating the WCU 110 to go to active mode.

Figure 4 is a schematic representation of the wireless communication device 100 in active mode 400. In this mode, the switch 160 is enabled, connecting the second DC/DC-converter 140 to provide 410 power to the WCU 110 through the second diode 172. The WCU 110 is configured to be in active mode (sleep mode "off") and can transmit or receive data from a remote wireless node. The processor 150 monitors for trigger signals indicating the WCU 110 to go to deep sleep mode.

### 1. Wireless Communication Device Components

The wireless communication device 100 comprises various components that work together to enable efficient power management of the device. In this section, we will discuss the components of the wireless communication device 100 in detail.

### 1.1. Battery and Power Supply

The wireless communication device 100 includes a battery 120 that provides power to the various components of the device. The battery 120 may have a voltage range of 1-2 volts, for example. The wireless communication unit (WCU) 110 may require a higher drive voltage in the range 3-4 volt. Therefore the battery 120 is connected to two DC/DC-converters needed for converting the voltage to the correct voltage level for the WCU 110, the first DC/DC-converter 130 and the second DC/DC-converter 140, which are responsible for driving the WCU 110 in different modes. In other examples, the battery 120 may have a voltage which is higher than the drive voltage for the WCU 110.

### 1.1.1. First DC/DC-converter for Deep Sleep Mode

The first DC/DC-converter 130 is connected to the battery 120 and is configured to drive the WCU 110 when it is in deep sleep mode. In some examples, the first DC/DC-converter 130 may be designed for a low quiescent current of less than 5 micro-Ampere, preferably less than 1 micro-Ampere, which helps to minimize power consumption when the WCU 110 is in deep sleep mode. The first DC/DC-converter 130 may be capable of delivering up to 100 mA of output current, for example.

### 1.1.2. Second DC/DC-converter for Active Mode

The second DC/DC-converter 140 is connected to the battery 120 via a switch 160 and is configured to drive the WCU 110 when it is in active mode. In some examples, the second DC/DC-converter 140 has been designed for high power capability of more than 0.5 Ampere preferably more than 1 Ampere output current, which allows the WCU 110 to operate efficiently during active mode when data transmission or reception is required. The output current for the second DC/DC-converter 140 may be significantly higher, at least five times, than the output current of the first DC/DC-converter 130.The second DC/DC-converter 140 may have a quiescent current of 25 micro-Ampere, for example, which is significantly higher, at least five times, than the quiescent current of the first DC/DC-converter 130.

### 1.1.3. Switch for Connecting Second DC/DC-converter

The switch 160 is responsible for connecting the second DC/DC-converter 140 to the WCU 110 when it is in active mode. The switch 160 is controlled by a processor 150, which determines the state of a trigger signal and configures the switch 160 accordingly. In some examples, the switch 160 may be integrated into the second DC/DC-converter 140 to simplify the overall design of the wireless communication device 100.

### 1.2. Wireless Communication Unit (WCU) Configuration

The WCU 110 is a key component of the wireless communication device 100 and is responsible for transmitting data to and receiving data from remote wireless nodes, such as a base station, access point or another wireless communication device. The WCU 110 can be configured to operate in different modes, such as active mode and deep sleep mode, depending on the power requirements and communication needs of the device.

### 1.2.1. Active Mode and Deep Sleep Mode

In active mode, the WCU 110 is configured to be able to transmit data to or receive data from a remote wireless node. In deep sleep mode, the transceiver parts in the WCU 110 are disabled, and the WCU 110 is not prepared for any communication with remote wireless nodes. This helps to conserve power when communication is not required.

### 1.2.2. Wireless Communication Protocols

The WCU 110 may be able to operate using different wireless communication protocols, such as NB-IoT, LTE CAT-M, NR-redcap, Bluetooth, WiFi, or LoRa, depending on the specific application and requirements of the wireless communication device 100.

### 1.3. Processor and Trigger Signal Monitoring

The processor 150 is a component of the wireless communication device 100 and is responsible for controlling the switch 160 and the modes of the WCU 110 based on the determined state of a trigger signal. In some examples, the processor 150 may powered by the first DC/DC-converter 130.

### 1.3.1. Determining State of Trigger Signal

The processor 150 monitors various trigger signals to determine if the WCU 110 should transition between active mode and deep sleep mode. In some examples, the trigger signals may be based on at least one of a
- A clock signal, or clock information indicating time instances when to configure the WCU 110 to be in active mode, or deep sleep mode. In one example, the time instances may be pre-configured in the wireless communication device, such transmit or receive data once per day, or once per hour etc., at time instances for instance depending on the wireless communication device 100 serial number or based on a random seed. This reduces the risk of several device communicating at the same time reducing risk of overload the communication system. In another example the time instances may be configured by a wireless remote node, the wireless communication device 100 during for instance a connection setup procedure.
- Sensor readings, such as data arrival from a sensor connected or associated to the wireless communication device 100 indicating a need for transmit sensor data to the remote wireless node. The sensor may be any kind of sensor, such as a camera-, temperature-, humidity-, accelerometer-, radar-sensor etc.
- User interaction, such as a button press indicating a need for the WCU 110 to be in active mode or being able to go to deep sleep mode.
- A mode change signal, i.e., a signal in the wireless communication device 100 that correlates to a further mode change of the WCU 110 As an example, the signal may go from a low to high voltage (or current) if the WCU 110 soon need to go to active mode from deep sleep mode and vice versa. For example, the signal change state 1-100 milliseconds prior to WCU 110 mode change is needed.

### 1.3.2. Controlling Switch and WCU Modes

Based on the determined state of the trigger signal, the processor 150 configures the switch 160 to be either enabled or disabled, connecting or disconnecting the second DC/DC-converter 140 to the WCU 110. The processor 150 may also controls the modes of the WCU 110, configuring it to be in either active mode or deep sleep mode as required.

### 1.4. Diodes for Power Supply Connection

The wireless communication device 100 may comprise two diodes, the first diode 171 and the second diode 172, which are responsible for connecting the outputs of the first and second DC/DC-converters 130, 140 to the power supply of the WCU 110.

### 1.4.1. First Diode for First DC/DC-converter Output

The first diode 171 has an input connected to the output of the first DC/DC-converter 130 and an output connected to the power supply of the WCU 110. This diode 171 ensures that power is supplied to the WCU 110 from the first DC/DC-converter 130 when the WCU 110 is in deep sleep mode. In some examples, the first diode 171 may be integrated into the first DC/DC-converter 130 to simplify the overall design of the wireless communication device 100.

### 1.4.2. Second Diode for Second DC/DC-converter Output

The second diode 172 has an input connected to the output of the second DC/DC-converter 140 and an output connected to the power supply of the WCU 110. This diode 172 ensures that power is supplied to the WCU 110 from the second DC/DC-converter 140 when the WCU 110 is in active mode. In some examples, the second diode 172 may be integrated into the second DC/DC-converter 140 to simplify the overall design of the wireless communication device 100.

These diodes 171, 172 help to prevent any reverse current flow between the first and second DC/DC-converters 130, 140 and ensure that the WCU 110 receives power from the appropriate converter depending on its mode of operation. Furthermore, in some example, one or both of the first diode 171 and second diode 172 may be a diode component or a diode module, the component or module comprising of a plurality of electronic components such as transistors, diodes, resistors, capacitances or inductances etc., where the diode component or diode module acts or operates as a diode.

### 2. Power Management Method for Wireless Communication Device

The power management method for the wireless communication device 100 aims to optimize the power consumption of the device by efficiently managing the transition between the deep sleep mode and the active mode of the wireless communication unit (WCU) 110. This method ensures that the device consumes minimal power when not actively transmitting or receiving data, thus prolonging the battery life 120 and reducing the need for frequent recharging or battery replacement.

### 2.1. Enabling First DC/DC-converter and Configuring WCU to Deep Sleep Mode

In one example, the power management method begins with enabling 200 the first DC/DC-converter 130 and configuring 210 the WCU 110 to be in a deep sleep mode. The first DC/DC-converter 130 is designed to have a low quiescent current, for example, less than 1 micro-Ampere, which allows the device to consume minimal power when the WCU 110 is in deep sleep mode. This feature is particularly advantageous for devices that need to operate for extended periods without access to a power source, such as remote sensors or IoT devices.

### 2.2. Disabling Switch to Disconnect Second DC/DC-converter

In some examples, the power management method includes disabling 220 the switch 160 to disconnect the second DC/DC-converter 140 from the WCU 110. This step ensures that the second DC/DC-converter 140, which is designed to provide high power for the active mode operation of the WCU 110, does not consume power when the WCU 110 is in deep sleep mode. The switch 160 may be integrated into the second DC/DC-converter 140 or may be a separate component.

### 2.3. Monitoring for Active Mode Trigger Signals

In one example, the processor 150 monitors 230 for trigger signals indicating the WCU 110 to go to an active mode. The trigger signals can be based on various factors, such as a clock signal, a mode change signal, sensor readings, or user interaction. By monitoring these trigger signals, the processor 150 can determine when it is necessary for the WCU 110 to transition from deep sleep mode to active mode, ensuring that the device only consumes higher power when it is required for data transmission or reception.

### 2.4. Enabling Switch and Configuring WCU to Active Mode upon Trigger Signal

Upon receiving an active mode trigger signal, the processor 150 enables 240 the switch 160 to connect the second DC/DC-converter 140 to the WCU 110 and configures 250 the WCU 110 to be in an active mode. The second DC/DC-converter 140 is designed to provide high power, for example, more than 1 A output current, which allows the WCU 110 to operate efficiently during data transmission or reception. This feature ensures that the device can quickly transition from deep sleep mode to active mode when required in a power efficient way, providing a responsive and efficient communication system.

### 2.5. Monitoring for Deep Sleep Mode Trigger Signals

In some examples, the processor 150 continues to monitor 260 for trigger signals indicating the WCU 110 to go to a deep sleep mode. These trigger signals may be based on various factors, such as a clock signal, a mode change signal, sensor readings, or user interaction. By monitoring these trigger signals, the processor 150 can determine when it is appropriate for the WCU 110 to transition back to deep sleep mode, ensuring that the device conserves power when not actively transmitting or receiving data.

### 2.6. Configuring WCU to Deep Sleep Mode and Disabling Switch upon Trigger Signal

Upon receiving a deep sleep mode trigger signal, the processor 150 configures (210) the WCU 110 to be in a deep sleep mode and disables the switch 160. This step ensures that the second DC/DC-converter 140 is disconnected from the WCU 110 and the device reverts to consuming minimal power through the first DC/DC-converter 130. This feature allows the device to efficiently transition between active mode and deep sleep mode based on the trigger signals, optimizing power consumption and prolonging battery life.

The power management method described above provides an efficient and responsive system for managing the power consumption of a wireless communication device 100. By intelligently transitioning between deep sleep mode and active mode based on trigger signals, the device can conserve power when not actively transmitting or receiving data, while still providing a responsive communication system when required. This method is particularly advantageous for devices that need to operate for extended periods without access to a power source, such as remote sensors or IoT devices.

### 3. Schematic Representations of Wireless Communication Device Modes

This section provides a detailed description of the schematic representations of the wireless communication device 100 in its various modes, specifically deep sleep mode 300 and active mode 400. The schematic representations illustrate the configuration of the device components and their interconnections, as well as the power supply paths in each mode. The advantages of the claim features are also discussed.

### 3.1. Deep Sleep Mode Configuration

In one example, the wireless communication device 100 is configured in deep sleep mode, where the first DC/DC-converter 130 is enabled and the switch 160 is disabled.

This configuration allows the device to consume minimal power, thereby prolonging the battery life 120 and ensuring efficient energy usage. The deep sleep mode is particularly advantageous for devices that need to operate for extended periods without frequent battery replacement or recharging.

### 3.1.1. Enabled First DC/DC-converter and Disabled Switch

In some examples, when the wireless communication device 100 is in deep sleep mode, the first DC/DC-converter 130 is enabled, providing power 310 to the wireless communication unit (WCU) 110 and the processor 150. The first DC/DC-converter 130 may have a low quiescent current, for example, less than 1 micro-Ampere, which contributes to the low power consumption in deep sleep mode. The switch 160 is disabled in this mode, disconnecting the second DC/DC-converter 140 from the WCU 110 and further reducing power consumption.

### 3.1.2. Power Supply through First Diode

In some examples, the power supply from the first DC/DC-converter 130 to the WCU 110 is provided through the first diode 171. The first diode 171 has its input connected to the output of the first DC/DC-converter 130 and its output connected to the power supply of the WCU 110. This configuration ensures that the power supply to the WCU 110 is maintained even when the switch 160 is disabled, allowing the device to remain operational in deep sleep mode.

### 3.2. Active Mode Configuration

In one example, the wireless communication device 100 is configured in active mode, where the switch 160 is enabled and the second DC/DC-converter 140 is connected to the WCU 110. This configuration allows the device to transmit or receive data from a remote wireless node, enabling communication and data exchange. The active mode is particularly advantageous for devices that need to periodically communicate with other devices or networks, such as IoT devices or sensors.

### 3.2.1. Enabled Switch and Connected Second DC/DC-converter

In some examples, when the wireless communication device 100 is in active mode, the switch 160 is enabled, connecting 410 the second DC/DC-converter 140 to the WCU 110. The second DC/DC-converter 140 may have a high power capability, for example, more than 1 A output current, which allows the device to handle the increased power requirements during data transmission or reception. The switch 160 may be integrated into the second DC/DC-converter 140 in some examples, simplifying the overall design and reducing the number of components.

### 3.2.2. Power Supply through Second Diode

In some examples, the power supply from the second DC/DC-converter 140 to the WCU 110 is provided through the second diode 172. The second diode 172 has its input connected to the output of the second DC/DC-converter 140 and its output connected to the power supply of the WCU 110. This configuration ensures that the power supply to the WCU 110 is maintained when the switch 160 is enabled, allowing the device to operate in active mode.

### 3.3. Processor Monitoring and Mode Transition

In one example, the processor 150 is responsible for monitoring trigger signals and transitioning the wireless communication device 100 between deep sleep mode and active mode based on the determined state of the trigger signals. The trigger signals may be based on various factors, such as a clock signal, a mode change signal, sensor readings, or user interaction.

### 3.3.1. Monitoring Trigger Signals in Deep Sleep Mode

In some examples, while the wireless communication device 100 is in deep sleep mode, the processor 150 continuously monitors for trigger signals indicating that the WCU 110 should transition to active mode. Upon detecting an active mode trigger signal, the processor 150 enables the switch 160 and configures the WCU 110 to be in active mode, as described in section 3.2.

### 3.3.2. Monitoring Trigger Signals in Active Mode

In some examples, while the wireless communication device 100 is in active mode, the processor 150 continuously monitors for trigger signals indicating that the WCU 110 should transition to deep sleep mode. Upon detecting a deep sleep mode trigger signal, the processor 150 disables the switch 160 and configures the WCU 110 to be in deep sleep mode, as described in section 3.1.

### 3.3.3. Transition between Modes based on Trigger Signals

In one example, the wireless communication device 100 may comprise a power management method that enables seamless transitions between deep sleep mode and active mode based on the determined state of the trigger signals. This method allows the device to efficiently manage its power consumption while maintaining the ability to communicate with remote wireless nodes when necessary.

### 4. List of examples

Example 1: A wireless communication device comprising a battery, a wireless communication unit (WCU) configured to be in an active mode or a deep sleep mode, a first DC/DC-converter connected to the battery and configured to drive the WCU when in the deep sleep mode, a second DC/DC-converter connected to the battery via a switch and configured to drive the WCU when in the active mode, and a processor configured to receive a trigger signal and, in dependence on the trigger signal, either configure the switch to be disabled, so that the WCU is driven by the first DC-DC converter, or configure the switch to be enabled, so that the WCU is driven by the second DC-DC converter.

Example 2: The device of example 1, wherein the trigger signal is based on at least one of the following: a clock signal, a mode change signal, sensor readings, or user interaction.

Example 3: The device of example 1 or 2, wherein the processor is further configured to control the modes of the WCU based on the determined state of the trigger signal.

Example 4: The device of any one of examples 1 to 3, further comprising a first diode having an input connected to an output of the first DC/DC-converter and an output connected to a power supply of the WCU.

Example 5: The device of any one of examples 1 to 4, further comprising a second diode having an input connected to an output of the second DC/DC-converter and an output connected to the power supply of the WCU.

Example 6: The device of any one of examples 1 to 5, wherein the first DC/DC-converter has a low quiescent current of less than 1 micro-Ampere.

Example 7: The device of any one of examples 1 to 6, wherein the second DC/DC-converter has a high power capability of more than 1 A output current.

Example 8: The device of any one of examples 1 to 7, wherein the processor is powered by the first DC/DC-converter.

Example 9: The device of any one of examples 1 to 8, wherein the switch is integrated in the second DC/DC-converter.

Example 10: The device of any one of examples 1 to 9, wherein the WCU is configured to operate using at least one of the following wireless communication protocols: NB-IoT, LTE CAT-M, NR-redcap, Bluetooth, WiFi, or LoRa.

Example 11: A method of power management for a wireless communication device according to any one of examples 1 to 10, the method comprising enabling the first DC/DC-converter and configuring the WCU to be in a deep sleep mode, disabling the switch to disconnect the second DC/DC-converter from the WCU, monitoring for trigger signals indicating the WCU to go to an active mode, enabling the switch to connect the second DC/DC-converter to the WCU and configuring the WCU to be in an active mode upon receiving an active mode trigger signal, monitoring for trigger signals indicating the WCU to go to a deep sleep mode, and configuring the WCU to be in a deep sleep mode and disabling the switch upon receiving a deep sleep mode trigger signal.

Example 12: The method of example 11, wherein determining the state of the trigger signal comprises monitoring at least one of the following: a clock signal, a mode change signal, sensor readings, or user interaction.

Example 13: The method of examples 11 or 12, wherein configuring the WCU to be in an active mode or a deep sleep mode is based on the determined state of the trigger signal.

Example 14: A computer program product comprising a non-transitory computer-readable medium storing instructions that, when executed by a processor of a wireless communication device according to any one of examples 1 to 10, cause the processor to perform the method according to any one of examples 11 to 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A wireless communication device (100) comprising:
a battery (120);
a wireless communication unit, WCU, (110), configured to be in an active mode (AM) or a deep sleep mode (SM)
a first DC/DC-converter (130) connected to the battery (120) and configured to drive the WCU (110) when in the deep sleep mode;
a second DC/DC-converter (140) connected to the battery (120) via a switch (160) and configured to drive the WCU (110) when in the active mode;
a processor (150) configured to receive a trigger signal and, in dependence on the trigger signal, either configure the switch (160) to be disabled, so that the WCU is driven by the first DC-DC converter (130), or configure the switch (160) to be enabled, so that the WCU is driven by the second DC-DC converter (140).

2. The wireless communication device (100) according to claim 1, wherein the trigger signal is based on at least one of the following: a clock signal, a mode change signal, sensor readings, or user interaction.

3. The wireless communication device (100) according to any one of claims 1 to 2, wherein the processor (150) is further configured to control the modes of the WCU (110) based on the determined state of the trigger signal.

4. The wireless communication device (100) according to any one of claims 1 to 3, further comprising a first diode (171) having an input connected to an output of the first DC/DC-converter (130) and an output connected to a power supply of the WCU (110).

5. The wireless communication device (100) according to any one of claims 1 to 4, further comprising a second diode (172) having an input connected to an output of the second DC/DC-converter (140) and an output connected to the power supply of the WCU (110).

6. The wireless communication device (100) according to any one of claims 1 to 5, wherein the first DC/DC-converter (130) has a low quiescent current of less than 1 micro-Ampere.

7. The wireless communication device (100) according to any one of claims 1 to 6, wherein the second DC/DC-converter (140) has a high power capability of more than 1 A output current.

8. The wireless communication device (100) according to any one of claims 1 to 7, wherein the processor (150) is powered by the first DC/DC-converter (130).

9. The wireless communication device (100) according to any one of claims 1 to 8, wherein the switch (160) is integrated in the second DC/DC-converter (140).

10. The wireless communication device (100) according to any one of claims 1 to 9, wherein the WCU (110) is configured to operate using at least one of the following wireless communication protocols: NB-IoT, LTE CAT-M, NR-redcap, Bluetooth, WiFi, or LoRa.

11. A method of power management for a wireless communication device (100) according to any one of claims 1 to 10, the method comprising:
enabling (200) the first DC/DC-converter (130) and configuring (210) the WCU (110) to be in a deep sleep mode;
disabling (220) the switch (160) to disconnect the second DC/DC-converter (140) from the WCU (110);
monitoring (230) for trigger signals indicating the WCU (110) to go to an active mode;
enabling (240) the switch (160) to connect the second DC/DC-converter (140) to the WCU (110) and configuring (250) the WCU (110) to be in an active mode upon receiving an active mode trigger signal;
monitoring (260) for trigger signals indicating the WCU (110) to go to a deep sleep mode; and
configuring (210) the WCU (110) to be in a deep sleep mode and disabling the switch (160) upon receiving a deep sleep mode trigger signal.

12. The method according to claim 11, wherein determining the state of the trigger signal comprises monitoring at least one of the following: a clock signal, a mode change signal, sensor readings, or user interaction.

13. The method according to claims 11 or 12, wherein configuring the WCU (110) to be in an active mode or a deep sleep mode is based on the determined state of the trigger signal.

14. A computer program product comprising a non-transitory computer-readable medium storing instructions that, when executed by a processor (150) of a wireless communication device (100) according to any one of claims 1 to 10, cause the processor (150) to perform the method according to any one of claims 11 to 13.
